# EUROPEAN PATENT SPECIFICATION

(11) **EP 4 064 886 B1**
(45) Date of publication and mention of the grant of the patent: **06.11.2024**
(21) Application number: 20808461.6
(22) Date of filing: 25.11.2020
(51) Int. Cl.: A24F 40/10, A24F 40/40, A24F 40/42, A24F 40/70

(54) **ELECTRONIC CIGARETTE**
ELEKTRONISCHE ZIGARETTE
CIGARETTE ÉLECTRONIQUE

(30) Priority: 29.11.2019 EP 19212684
(43) Date of publication of application: 05.10.2022
(73) Proprietor: JT International SA, 1202 Geneva (CH)
(72) Inventor: SHEN, Pifa, Town Shenzhen, Bao'an District 518102 (CN); MING, Zhinan, 518102 Bao'an District (CN)
(74) Representative: Gill Jennings & Every LLP
(86) International application number: PCT/EP2020/083314
(87) International publication number: WO 2021/105180

(56) References cited:
- EP-A1- 3 476 229
- WO-A1-2019/050132
- US-A1- 2015 114 410
- US-A1- 2016 286 861
- US-A1- 2017 208 864

## Description

### Field of invention

The present invention relates to personal vaporizing devices, such as electronic cigarettes. In particular, the invention relates to an electronic cigarette configured to receive disposable cartridges containing a vaporizable material.

### Background

Electronic cigarettes are an alternative to conventional cigarettes. Instead of generating a combustion smoke, they vaporize a liquid, which can be inhaled by a user. The liquid typically comprises an aerosol-forming substance, such as glycerin or propylene glycol that creates the vapour. Other common substances in the liquid are nicotine and various flavourings. There are several different types of electronic cigarettes, and in general they can be divided into liquid vaporizers, heated tobacco vaporizers or a combination (i.e. a hybrid device) thereof.

An electronic cigarette is typically a hand-held inhaler system, comprising a mouthpiece portion and a power supply portion. Electronic cigarettes are generally configured to receive disposable cartridges containing a vaporizable material are further provided with a power supply portion and a cartridge seating for accommodating the cartridge and for heating the substrate to produce an inhalable vapour to be drawn through the mouthpiece. An example of such an electronic cigarette is described in US2016286861, which comprises an inner frame for holding functional components of the device within an outer housing.

There are a number of problems with such known devices. One issue is that manufacturing and assembly of the device is not straightforward due to the number of functional components which must be assembled together in the housing which can be a time consuming procedure requiring significant skill. Slight variations in the corresponding positioning of the functional components during assembly can also lead to variation in performance between devices.

It is an object of the present invention to provide an electronic cigarette which addresses some of these problems.

### Summary

According to a first aspect of the invention there is provided an electronic cigarette comprising an outer housing sleeve having an open end and a closed end; a functional insert comprising electrical components, where the electrical components comprise a battery and electronic circuitry for supplying power from the battery to a cartridge received in the cartridge seating during use; wherein the functional insert is arranged to be introduced through the open end of the outer housing sleeve and is held within the outer housing sleeve wherein the functional insert (20) comprises a first shell portion (51) and a second shell portion (52); wherein the first and second shell portions are configured to connect along a longitudinal interface to enclose the electrical components within. By grouping the functional electronic components together on the functional insert and by providing the device housing in the form of a sleeve, the assembly process is simplified as the functional components can be assembled in a first assembly step and then subsequently sleeved within the outer housing in a single step, thus reducing the complexity of the assembly procedure. It is also more straightforward to reproducibly assemble the functional components in the correct arrangement when this carried out on a separate integral structure before sleeving this within the housing, thus reducing variation in the performance of the electronic cigarette. By providing the housing in the form of a separate integral sleeve it can also be fabricated with a robust shape to withstand impact forces and better protect the functional components. In some examples the functional insert may comprise other electrical components instead or in addition to the battery and electrical circuitry.

The term "functional insert" refers to a component which comprises the functional components of the device, that is, the components associated with the functional of producing an aerosol for inhalation, in particular the electrical components. The functional insert is preferably an integral component to which the functional elements of the electronic cigarette are attached or housed within. In this way the functional insert can be assembled in a first step and then in a subsequent second step, the functional can be moved as integral components and positioned within the outer housing, preferably being fixed in place with one or more fasteners.

In particular the functional insert is arranged to be introduced through the open end of the outer housing sleeve during initial assembly of the device and then secured in place.

The outer housing sleeve preferably comprises a hollow tubular housing with an open end, through which the functional insert may be inserted into the device during assembly, and a closed end. The closed end is "closed" in that the insert can only be introduced through the open end but the closed end may comprises one or more openings, for example to accommodate an air inlet and/or charging port.

As used herein, the term "inhaler" or "electronic cigarette" may include an electronic cigarette configured to deliver an aerosol to a user, including an aerosol for smoking. An aerosol for smoking may refer to an aerosol with particle sizes of 0.5 - 7 microns. The particle size may be less than 10 or 7 microns. The electronic cigarette may be portable. The term "inhaler" or "electronic cigarette" is also intended to cover "heat not burn" devices which generate an aerosol by heating a material, for example tobacco, sufficiently to release a vapour without burning the material.

The functional insert preferably comprises a cartridge seating for receiving a removable cartridge containing a liquid to be vaporised in addition to the battery; and electronic circuitry for supplying power from the battery to a cartridge received in the cartridge seating during use. These components require careful assembly and relative positioning so by providing them in the form of an integral functional insert provides significant reduction in the complexity of manufacture. The functional insert preferably comprises one or more of a PCB, an airflow sensor for sensing inhalation at the mouthpiece so that power provision to a cartridge in the cartridge seating may be initiated, a charging port for connecting the battery to mains power, a connection mechanism for connecting to a mouthpiece.

The cartridge seating is preferably a first cartridge seating configured to receive a first cartridge so as to connect the first cartridge to the battery and provide a vapour flow route through the cartridge to the mouthpiece. The first cartridge is preferably a cartomizer, i.e. a cartridge comprising a liquid store, a heating element arranged to heat the liquid to produce an aerosol, a vapour flow passage way to transport the generated aerosol through the cartridge to an outlet near the mouthpiece and electrical contacts for connecting to corresponding contacts in the cartridge seating such that power can be supplied to the heating element. The first cartridge may comprise an aerosol-forming substance such as propylene glycol and/or glycerol and may contain other substances such as nicotine and acids. The liquid L may also comprise flavourings such as tobacco, menthol or other flavours. The mouthpiece may comprise a vapour outlet through which a vapour generated in the first cartridge may be inhaled by a user when the mouthpiece is in the closed position.

Preferably the cartridge seating is arranged such that a cartridge lies at least partially, preferably predominantly within the outer housing sleeve of the electronic cigarette when received in the cartridge seating during use. Preferably the cartridge seating is arranged such that a cartridge lies fully within the outer housing sleeve of the electronic cigarette when received in the cartridge seating during use. In particular preferably the functional insert is arranged such that it lies fully within the outer housing sleeve and the cartridge seating is positioned fully within the functional insert. Preferably a first end of the functional insert lies flush with the open end of the outer housing sleeve and an opening to the cartridge seating is positioned on the first end of the functional insert. In this way a cartridge is received within the outer housing, providing a more compact device and making the cartridge seating easily accessible. Furthermore the opening to the cartridge seating may be sealed by a mouthpiece portion which contacts the first end of the functional insert.

Preferably the electronic cigarette further comprises: a mouthpiece portion (also referred to as the mouthpiece), the mouthpiece portion preferably being moveably connected the outer housing sleeve or functional insert by a connection mechanism; wherein the connection mechanism is configured to enable the mouthpiece portion to move relative to the functional insert between: a closed position in which the first cartridge seating is enclosed in the electronic cigarette; and an open position in which the first cartridge seating is exposed such that a first cartridge can be received, while the mouthpiece portion remains connected to the functional insert or outer housing sleeve by the connection mechanism.

Preferably the functional insert comprises a first end positioned at the open end of the housing sleeve and a second end positioned towards the closed end of the housing sleeve, the electronic cigarette further comprising: a mouthpiece moveable between an open and closed position by a movement mechanism, preferably hinge mechanism, connecting the mouthpiece to the first end of the functional insert. In this way, a first cartridge may be inserted and removed from the first cartridge seating in a straightforward and user-friendly manner without disconnecting the mouthpiece from the device, thereby preventing the risk of losing or breaking the mouthpiece component. By connecting the mouthpiece to the functional insert the movement mechanism, such as a hinge mechanism, may be assembled on the functional insert, rather than the housing, thus simplifying the manufacturing procedure.

The functional insert may comprise a first contacting surface at a first end of the functional insert and the mouthpiece may comprise a second contacting surface, wherein the first and second contact surfaces are brought together when the mouthpiece is brought to the closed position such that they are in contact or closely adjacent. The first and second contacting surfaces may be aligned in the closed position so as to be held against or near each other with a portion of one or both surfaces exposed in the open position. The first cartridge seating may be provided in the first contacting surface wherein movement of the mouthpiece to the open position exposes at least a portion of the first cartridge seating such that a first cartridge may be received. One or both contact surfaces may be substantially normal to an elongate axis of the functional insert or one or both may be angled to the elongate axis.

Preferably, the mouthpiece portion comprises a second cartridge seating configured to receive a second cartridge. Accordingly the characteristics of the generated vapour may be formed as a combination of two vapours generated from the respective cartridges such that vapour characteristics can be adjusted and enhanced, thereby improving the user experience. Preferably the second cartridge is replaceable. The second cartridge may be inserted into the second cartridge seating through an opening in the second cartridge seating. The second cartridge seating may be provided by a mouthpiece channel which runs through the mouthpiece from a vapour outlet, through which vapour is inhaled, to an internal opening in the second contacting surface which is adjacent to the first cartridge seating when the mouthpiece is in the closed position. The opening in the cartridge seating may be provided by the vapour outlet in the mouthpiece portion such that the second cartridge may be inserted when the mouthpiece is in a closed position. The second cartridge may be configured such that it provides a mouthpiece through which a user inhales the generated vapour. In particular, when the second cartridge is inserted a portion of the second cartridge may protrude from the mouthpiece portion providing a mouthpiece.

The second cartridge may also comprise an aerosol-forming substance such as tobacco, propylene glycol and/or glycerol and may contain other substances such as nicotine and acids. The liquid may also comprise flavourings such as tobacco, menthol or other flavours. Preferably the second cartridge comprises a tobacco substrate. In this way, the vapour generated in the first cartridge passes through the tobacco substrate, picking up compounds which provide the generated vapour with an improved flavour and nicotine content, enhancing the user experience.

Preferably the electronic cigarette is arranged such that, when the mouthpiece portion is brought to the closed position, a vapour flow path is created between the first cartridge and the second cartridge. In particular, when a first cartridge is received in the first cartridge seating, a second cartridge is received in the second cartridge seating and the mouthpiece is brought to the closed position a fluidic connection is formed between the first cartridge, the second cartridge and the mouthpiece. In this way, a vapour generated in the first cartridge, flows through the second cartridge which imparts new characteristics on the generated vapour before it is inhaled by the user through the mouthpiece. A wide range of different vapour characteristics may therefore be provided, enhancing the user experience and the inhaled vapour may have improved flavour or active ingredient content.

Preferably the hinge mechanism, connecting the mouthpiece to the first end of the functional insert, comprises an internal lever, the lever being fixedly connected at one end to the mouthpiece portion and rotatably connected at the opposite end in a receiving portion located in the functional insert. By providing an internal hinge mechanism, the mechanism is protected within the functional insert improving the lifetime of the mechanism and the external shape of the device may be uniform, improving the usability.

Preferably the lever is L-shaped and the lever connects a central point in the mouthpiece portion to a point near an edge of the functional insert. This allows an internal lever to provide an increased displacement of the mouthpiece portion with a smaller movement of the lever. In particular, the lever may be connected near a radial extremity of the first contact surface and nearer the centre of the second contacting surface.

Preferably the receiving portion comprises an elongate slot which is configured to retain the rotating end of the lever while enabling it to both rotate in the elongate slot and move linearly along the elongate slot. In this way the displacement of the mouthpiece portion from the functional insert may be increased in the open position as the mouthpiece portion both rotates away from the functional insert and translates away from the functional insert. This allows an opening of the first cartridge seating to be exposed with a reduced degree of rotation of the mouthpiece portion, thereby reducing the space required for the hinge mechanism.

The functional insert may be elongate and the elongate slot may be at least approximately aligned with the elongate axis of the functional insert such that when the mouthpiece portion moves to the open position the mouthpiece portion both rotates relative to the functional insert and moves linearly away from the functional insert. The mouthpiece portion therefore moves away from the functional insert in a direction aligned with the elongate axis of the electronic cigarette, ensuring the first contacting surface is sufficiently exposed for the cartridge to be replaced. The linear movement of the mouthpiece portion enables the opening of the functional insert cartridge seating to be liberated with a minimal degree of rotation of the mouthpiece portion such that a first cartridge can be introduced.

Preferably the electronic cigarette further comprises a first retaining element configured to releasably retain the mouthpiece portion in the closed position. In this way the mouthpiece is held securely in the closed position, prevent accidental opening which could result in loss of a cartridge, while also allowing a user to easily overcome the retaining force to open the device when needed.

Preferably the electronic cigarette further comprises a second retaining element configured to releasably retain the mouthpiece portion in the open position such that the mouthpiece portion is bi-stable and in an equilibrium position in both the open position and the closed position. The mouthpiece is thus held stably in both the open and closed positions, increasing the ease with which one or both cartridges can be replaced. Preferably the first and/or second retaining element comprises a magnet. The term "magnet" may comprise one or more of a permanent magnet, magnets of different polarities or ferromagnetic material. Preferably the mouthpiece is always under the action of one or both magnetic retaining elements as it moves between the open and closed positions ensuring it will be brought to one of the two stable equilibrium positions from any point in its range of movement. Preferably the electronic cigarette further includes a biasing element configured to bias the mouthpiece into a closed position.

Preferably the functional insert comprises a battery and the functional insert is elongate; wherein the first cartridge seating and the battery extend side by side in the elongate direction and the hinge mechanism is located above the battery. This makes efficient use of the space provided by the functional insert within the outer housing sleeve.

Preferably, the mouthpiece portion comprises a seal configured to abut against a vapour outlet of the first cartridge when the mouthpiece is in the closed position to form a fluidic connection between the first cartridge and the mouthpiece. In some examples, the seal has a first side configured to abut against the first cartridge and an opposing second side configured to abut against the second cartridge when the mouthpiece is in the closed position to form a fluidic connection between the first cartridge and the second cartridge. Preferably the seal lies away from the opening to the first cartridge seating when the mouthpiece is in the open position but is brought into contact with the opening when in the closed position. The seal may form part of the mouthpiece. In this way, the seal does not interfere with exchange of the first cartridge.

Preferably the outer housing sleeve further comprises a rim running circumferentially around an inner surface of the sleeve at the open end; wherein the functional insert is configured to engage with the rim. In this way the rim engage with the functional insert to secure it in the housing. In particular it may be arranged to engage the functional insert to hold it at the correct position in the outer housing sleeve, for example such that the first end of the functional insert is aligned with the open end of the housing sleeve.

Preferably the functional insert comprises a circumferential rim running around the outer surface of the functional insert, wherein the circumferential rim of the functional insert is arranged to contact the rim of the housing sleeve to hold the functional insert in position within the housing sleeve. This provides a straightforward means to position the functional insert at the correct position within the housing.

Preferably the housing sleeve comprises a first aperture on an inner surface and the functional insert comprises a second, corresponding, aperture arranged to align with the first aperture when the functional insert is received in the outer housing sleeve to allow the housing sleeve and functional insert to be attached with a fastener, such as a screw through the aligned apertures. In particular the first aperture may be provided near or at the open end of the outer housing sleeve so as to provide easy access to secure the apertures together. In this way the functional insert may be secured in position within the outer housing sleeve with minimal fixation means allowing the electronic cigarette to be assembled rapidly in a straight forward manner.

Preferably the functional insert comprises an outer shell which houses the electrical components. Preferably the functional insert comprises a first a shell portion and a second shell portion; wherein the first and second shell portions are configured to connect along a longitudinal interface to enclose the electrical components within. This provides additional protection to the electronic components which are housed within the shell of the functional insert and also the outer sleeve. This arrangement is straightforward to assemble allowing the electrical components to be arranged before being enclosed from either side with the shell portions to provide the integral functional insert for insertion into the outer housing sleeve. Preferably the shell, and/or the first and second shell portions, comprise a thermoplastic material suitable for thermoplastic or ultrasonic welding.

Preferably the first shell portion and the second shell portion are offset in relation to each other, such that one shell portion extends further than the other in a direction towards the closed end of the housing sleeve. This allows certain functional components to remain exposed allowing access while they are retained within the shell, for example allowing them to be replaceable.

Preferably the first shell portion and the second shell portion comprise engaging structures configured to attach to each other, wherein the engaging structures provide a snap-lock or friction fit. This further enhances the ease of assembly of the functional insert prior to sleeving within the outer housing.

Preferably the housing sleeve further comprises at least one guide rail arranged along an inner surface and the functional insert comprises a slot configured to engage with the guide rail. Preferably the guide rail and the slot are arranged such that the functional insert can only be inserted in a predefined orientation. This ensures that the functional insert is correctly orientated relative to the outer housing sleeve. Preferably the guide rail further comprises an aperture for receiving a fastener in order to attach the insert to the housing sleeve. The functional insert may further comprises an aperture which is arranged to align with the aperture on the guide rail so that the functional inert can be secured within the outer housing, for example with a screw that passes through both apertures. This process may be carried out once the functional insert is inserted as the apertures are readily accessible through the open end, improving ease of assembly.

Preferably the functional insert comprises a first end comprising an opening to the cartridge seating and a second end at the opposite end of the functional insert; wherein the first end of the functional insert is angled such that the functional insert has an increased length along a longitudinal line passing through the cartridge seating. In this way more space is provided for the cartridge seating within the functional insert, allowing cartridges of greater volume to be accepted.

Preferably the functional insert is elongate and the functional insert comprises a battery and a cartridge seating; wherein the battery and the cartridge are positioned side-by-side along the elongate axis of the functional insert. In this way, the volume of the functional insert is efficiently utilised.

In a further aspect of the invention there is provided a kit comprising: an electronic cigarette and a removable cartridge wherein the electronic cigarette comprises: an outer housing sleeve having an open end and a closed end; a functional insert comprising a cartridge seating arranged to receive the removable cartridge and electrical components, wherein the functional insert is arranged to be introduced through the open end of the outer housing sleeve and is held within the outer housing sleeve. In a further aspect of the invention there is provided a first cartridge configured for use with electronic cigarette as defined in any of the appended claims.

In a further aspect of the invention there is provided a method of assembling an electronic cigarette, the method comprising providing a functional insert comprising electrical components and an outer housing sleeve having an open end and a closed end; and introducing the functional insert through the open end of the outer housing sleeve and securing the functional insert such that it is held within the outer housing sleeve.

### Brief description of the drawings

The invention will now be described with reference to the appended drawings, which by way of example illustrate embodiments of the present invention and in which like features are denoted with the same reference numerals, and wherein:
Figure 1A and 1B respectively illustrate a functional insert and an outer housing sleeve according to the present invention;
Figures 2A and 2B illustrate an electronic cigarette according to the present invention;
Figure 3 schematically illustrates a mouthpiece portion for an electronic cigarette according to the present invention;
Figure 4 schematically illustrates an electronic cigarette according to the present invention;
Figured 5A and 5B schematically illustrate a functional insert for an electronic cigarette according to the present invention;
Figure 5C and 5D schematically illustrate alternative arrangements of the functional insert for an electronic cigarette according to the present invention;
Figure 6 schematically illustrates an outer housing sleeve for an electronic cigarette according to the present invention;
Figures 7A and 7B respectively schematically illustrate a functional insert and a corresponding outer housing sleeve according to the present invention;
Figure 8 schematically illustrates an electronic cigarette according to the present invention;
Figure 9 schematically illustrates a portion of an electronic cigarette according to the present invention.

### Detailed description

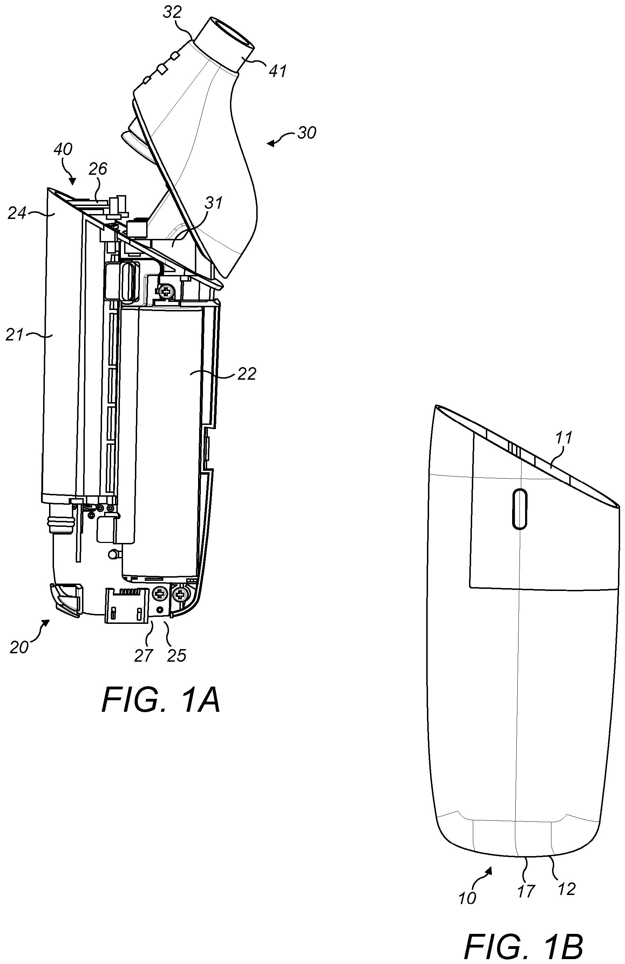

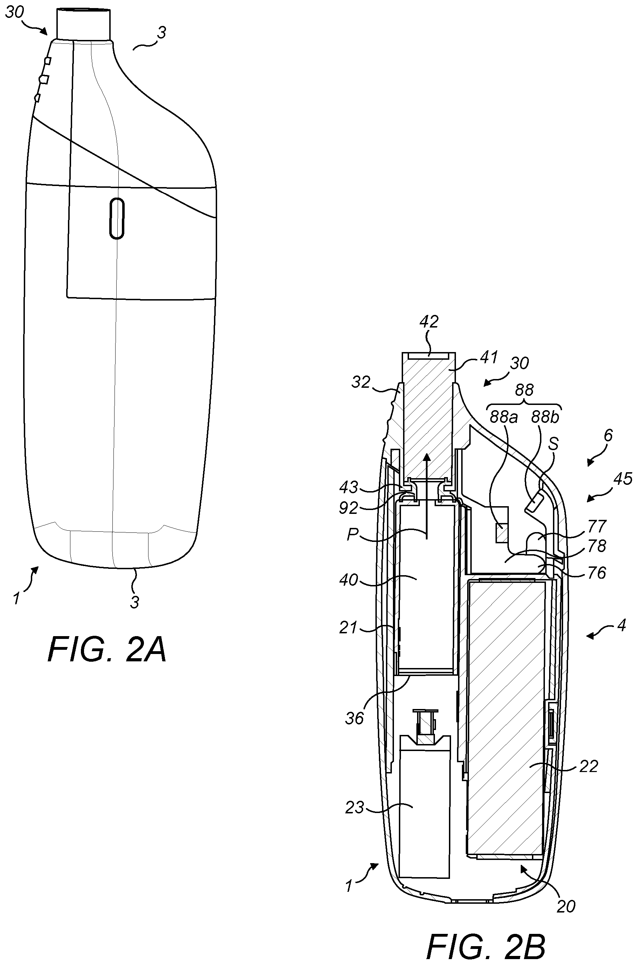

Figures 1 and 2 schematically illustrate an electronic cigarette 1 which comprises an outer housing sleeve 10 having an open end 11 and a closed end 12 and a functional insert 20 which comprises the electrical components of the device. The functional insert 20 is arranged to be introduced to the open end 11 of the outer housing sleeve 10 and is held within the outer housing sleeve 10. These features provide a number of advantages. In particular, this structure allows for a modular assembly process in which the functional electronic components of the device can be assembled into a single integral assembly, the functional insert 20, and this can be simply introduced into the housing sleeve 10 to form the completed device 1, shown in Figure 2A. The source allows for the device to be disassembled and repaired when needed by simply removing the outer housing sleeve. Further advantages in terms of temperature management may be achieved by suspending the functional insert within the outer housing sleeve 10 to minimize heat conduction from the heater components to the outer shell. Furthermore, the outer housing sleeve 10 may be formed as a single integral component, providing enhanced strength and resistance to breakage. A number of further technical advantages are described with respect to the specific components of the device, described below.

Figures 1A and 1B schematically illustrate an exemplary embodiment of the functional insert 20 and the outer housing sleeve 10 respectively. Figures 2A and 2B schematically illustrate the electronic cigarette formed from the functional insert 20 held within the outer housing sleeve 10 in an outer and cross sectional view. As shown in Figure 2A, the electronic cigarette 1 has a substantially elongate body running from a base end 2 to a mouthpiece end 3, with a mouthpiece portion 30 positioned at the mouthpiece end 3. As shown in Figure 1A, the functional insert 20 comprises the functional components of the device 1, i.e. the electronic components which provide the aerosol generation function of the device 1. In particular, the functional insert includes a first cartridge seating 21 for receiving a first removable cartridge 40 a power supply in a form of a battery 22 and electronic circuitry for controllably supplying power from the battery 22 to a cartridge 40 received in the cartridge seating 21 during use.

The electronic cigarette 1 comprises a mouthpiece portion 30 connected to the functional insert 20, wherein the mouthpiece portion 30 is moveable relative to the functional insert 20 by the connection mechanism 31 between an open position in which the first cartridge seating 21 is exposed such that a first cartridge 40 can be received; and a closed position in which the first cartridge seating 21 is enclosed in the electronic cigarette 1. In this way, the mouthpiece portion 30 may be moved to the open position while remaining connected to the functional insert 20 via the connection mechanism 31 to allow a cartridge 40 to be inserted into the first cartridge seating 21 of the functional insert 20. The mouthpiece portion 30 may then be returned to the closed position to enclose the received first cartridge 40 in the device 12.

The electronic cigarette 1 is assembled by placing the functional insert 20 within the outer housing speed 10 to form the complete electronic cigarette 1 shown in Figure 2A. During use, the user inhales through the mouthpiece portion 30 whilst power is supplied to a cartridge received in the cartridge seating 21 to heat a heating element and vaporize an aerosol generating liquid contained in the cartridge 40 whereby the aerosol is inhaled by the user through the mouthpiece 30. The device illustrated in the figures further includes a second cartridge seating 32 provided in the mouthpiece 30. The second cartridge seating is arranged to receive a second cartridge 41. The first and second cartridge seatings 21, 32 and the mouthpiece are arranged such that when the mouthpiece is closed, a first cartridge 40 received in the first cartridge seating 21 forms a sealed fluidic passage through the second cartridge 41 received in the second cartridge seating 32 to the mouthpiece such that the inhaled vapor may comprise components from both the first cartridge 40 and the second cartridge 41. As shown in Figures 1A, 2A and 2B the second cartridge 41 is arranged so as to protrude from the mouthpiece 30 when received in the mouthpiece such that a portion of the second cartridge 41 provides part of the mouthpiece from which the user may inhale the generated vapor.

The various features of the functional insert 20 are shown in the cross sectional diagram of Figure 2B. In particular, Figure 2B illustrates the battery 22 and the electronic circuitry 23 arranged to supply power from the battery to a cartridge 40 received in the first (main) cartridge seating 21. Figure 2B further shows how, when the mouthpiece 30 is in the closed configuration, a second cartridge 41 received in the second cartridge seating 32 within the mouthpiece 30 is brought into sealed engagement with the first cartridge 40 received in the first cartridge seating 21. In this way, an aerosol generated within the first cartridge is drawn through the second cartridge 41 through an air outlet 42 positioned in a protruding portion of the second cartridge 41 which acts as the mouthpiece, such that the inhaled aerosol includes components from both the first and second cartridges 40, 41.

As shown in Figures 1 and 2, the functional insert 20 and housing sleeve 10 both comprise a corresponding elongate shape of substantially similar dimensions such that when the electronic cigarette 1 is assembled the functional insert 20 lies fully within the outer housing sleeve 10 as shown in Figure 2A and 2B. The body of the functional insert 20 extends between a first end 24 comprising the opening to the first cartridge seating 21 and a second, base end 25. The electronic cigarette 1 is arranged such that the first end 24 of the functional insert 20 is arranged at the open end 11 of the outer housing sleeve 10 and the second, base end 25 of the functional insert 20 is arranged at the closed end 12 of the outer housing sleeve 10. The mouthpiece 30 of the electronic cigarette 1 is connected to the first end 24 of the functional insert 20 by a movement mechanism 31.

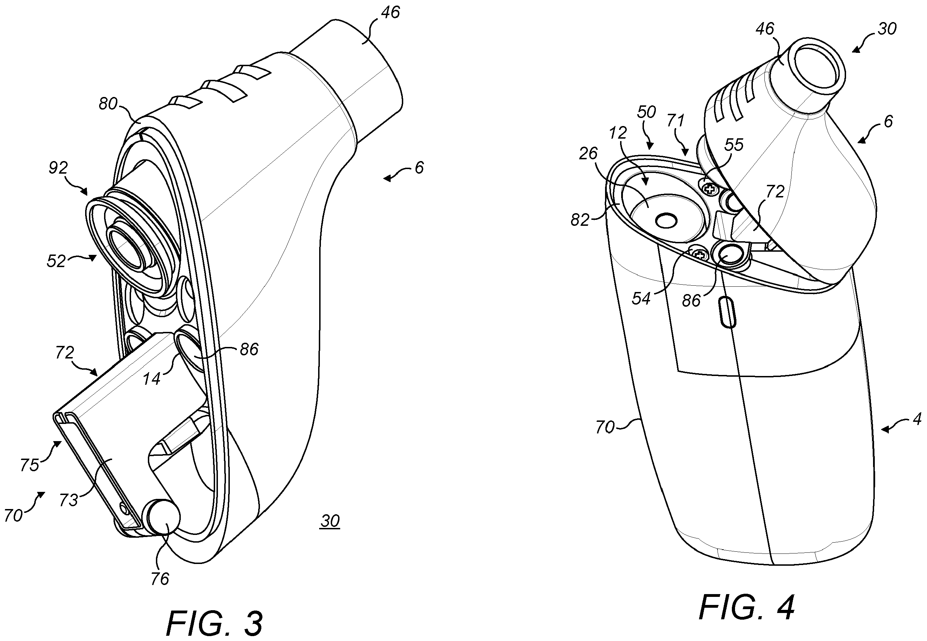

As shown most clearly in Figure 3, the connecting mechanism 31 between the mouthpiece portion 30 and functional insert 20 is preferably configured as a hinge mechanism 70. As seen in Figure 1A, 2B and 4, the hinge mechanism 70 is connected to the first end 24 of the functional insert 20 and is arranged so as to be fully enclosed within the electronic cigarette 1 when the mouthpiece is in the closed configuration. This is advantageous as the hinge mechanism 70 is invisible from the outside of the electronic cigarette 1 such that a user's hand does not interfere with the hinge mechanism 70 when using the device. Furthermore the hinge mechanism 70 can be protected inside the electronic cigarette 1 when the mouthpiece 30 is in a closed position.

As best seen in Figure 3 and 4, the hinge mechanism 70 comprises a lever 72 comprising a first connection end 74 fixedly connected to the mouthpiece portion 30 and a second connection end 76 rotatably connected to a receiving portion 77 of the functional insert 20. The second connection end 76 can be configured as a rotating joint 76. The rotating joint 76 may be in the form of a pin or axle which is retained within the receiving portion 77 of the functional insert 20 such that the rotating joint 76 defines the axis of rotation about which the lever 72 may rotate.

It is desirable to create an electronic cigarette device 1 with a compact and ergonomic shape. It is therefore needed to reduce the internal space needed for the hinge mechanism 70. The movement of the lever 72 in the horizontal direction of the electronic cigarette 1 should therefore be reduced. The hinge mechanism 70 may therefore be designed to provide a combined rotary and linear movement of the mouthpiece portion 30 as it is moved to the open position.

The hinge mechanism 70 can be configured to enable the mouthpiece portion 30 to both rotate and move axially away from the functional insert 20 which allows for the opening 26 of the first cartridge seating 21 to be exposed with a reduced degree of rotation of the mouthpiece portion 30, thereby reducing the space required for the hinge mechanism 70. To achieve the rotation and linear motion of the mouthpiece portion 30, the receiving portion 77 in the form of an elongate axial slot 77, shown in Figure 2B, in which the rotating joint 76 at the rotating end 76 of the lever 72 is retained. The linear slot 77 and the lever 72 are retained such that the rotating end of the lever 72 may rotate within the slot 77 and move linearly in a direction corresponding to the elongate axis of the slot 77. In this way the lever 72 can both rotate and translate as the mouthpiece portion 30 moves to the open position.

The linear slot 77 therefore defines end positions comprising the limits of the linear movement, where the end positions correspond to the position of the rotating joint 76 when the mouthpiece portion 30 is located in the closed position and the open position, respectively. Hence the joint 76 at the rotating end of the lever 72 is located in a lower end of the linear slot when the mouthpiece portion is in a closed position, as shown in Figure 2B, and the joint 76 is located in an upper end of the linear slot 77 when the mouthpiece portion 4 is in an open position, as shown in Figure 4.

The limiting surface S, shown in Figure 2B, can be provided on an axial extension connected to the functional insert 20 and is met by a corresponding surface of the lever 72 when it reaches the fully open position, thus limiting further rotation of the lever 72. In other words, the functional insert 20 comprises an internal surface S arranged to be met by the lever 72 as it rotates to prevent further rotation at a certain point. This surface S may be provided as a portion of the first end 24 of the functional insert that extends in a direction towards the mouthpiece 30 along the elongate axis of the functional insert 20.

The linear movement of the mouthpiece portion 30 enables the opening 26 of the main cartridge seating 21 to be liberated with a minimal degree of rotation of the mouthpiece portion 30 such that a first cartridge 40 can be introduced. This also reduces the space required in the functional insert 20 for the hinge mechanism 70.

One or more retaining elements 88, preferable in the form of magnetic elements may be positioned such as to encourage the rotational and linear movement of the mouthpiece portion 30 provided by the hinge mechanism 70. In particular a magnetic element 88b (see Figure 2B) may be provided on the limiting surface S and corresponding magnetic material 88a on the opposing surface of the lever 72 such that upon the user initially opening the mouthpiece portion 4 the lever 72 is encouraged to rotate and translate upwards linearly such that the corresponding magnets meet, then retaining the mouthpiece portion 30 in a stable, open position.

The lever 72 is substantially L-shaped and comprises a horizontal portion 73, a vertical portion 75 and the joint 76, as shown in Figure 3. The L shape allows a point towards the centre of the underside of the mouthpiece portion 30 to be connected to a point near the radial extremity of an upper surface of the first end of the functional insert 20. This allows for an internal lever mechanism to be provided and enhances the displacement of the mouthpiece portion 30 from the functional insert for a smaller degree of rotation.

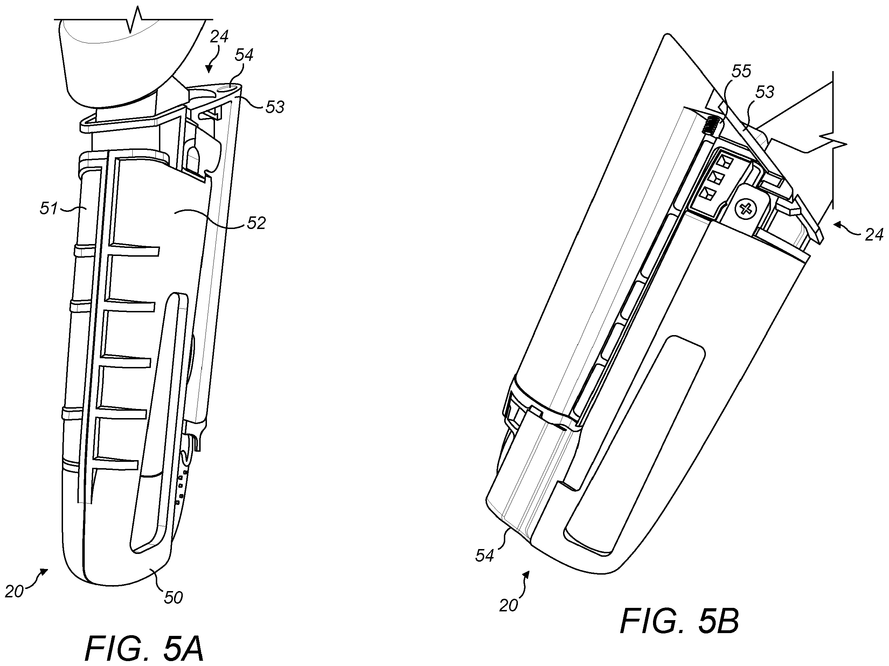

Figures 5A and 5B show further details of the functional insert 20. As shown in Figures 5A and 5B, the functional insert may comprise an outer shell 50 which houses the various electronic components of the functional insert 20. In particular, the shell 50 comprises a first shell portion 51 and a second shell portion 52. The first and second shell portions 51, 52 are arranged such that they connect along a longitudinal interface running along the elongate axis of the functional insert 20. The first and second shell portions 51, 52 thereby enclose the functional electrical components within the shell 50. The first and second shell portions 51, 52 may comprise a thermoplastic material allowing for the first and second shell portions 51, 52 to be welded along the longitudinal interface to seal the shell 50 around the internal electronic components. In other examples of the invention, the first and second shell portions 51, 52 may comprise corresponding engaging structures which are configured to attach to each other, allowing the first and second shell portions 51, 52 to be releasably engaged with each other to seal the electronic components. For example, the engaging structures may allow a snap lock or friction fit connection between the shell portions 51, 52.

One or more parts of the shell portions 51, 52 may be removable to allow the internal electrical components to be serviced, replaced or repaired. The shell 50 of the functional insert 20 also includes a circumferential rim 53 running around an outer surface of the shell 50 at the first end 24 functional insert 20. The functional insert rim 53 engages with a corresponding feature within the outer housing shell 10 in order to assist in retaining the functional insert 20 at the correct position within the outer housing shell 10, as will be described. As shown in Figure 5B, the functional insert 20 further includes a longitudinal slot 54 running along an outer surface of the shell in a direction corresponding to the elongate axis of the functional insert 20.

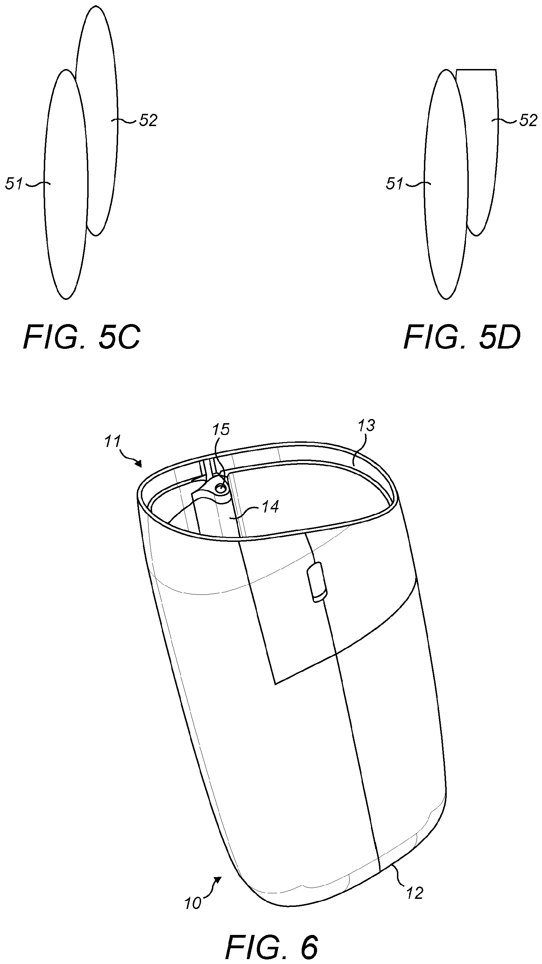

As illustrated in figure 5C, the first shell portion 51 and the second shell portion 52 may be off-set in relation to each other when assembled together. In other words, at least one of distal end of the first shell portion 51 and the second shell portion 52 is offset in relation to the other.

For example, as illustrated in figure 5D, one of the shell portions 51, 52 can be shorter than the other shell portion 51, 52. For instance, the distance in length can be between 50% and 75%. This enables some of the components to remain exposed when the first shell portion 51 and the second shell portion are assembled to each other. The exposed component can be more easily removed if replacement is needed or can be assembled onto the insert after the first shell portion 51 and the second shell portion 52 are attached to each other.

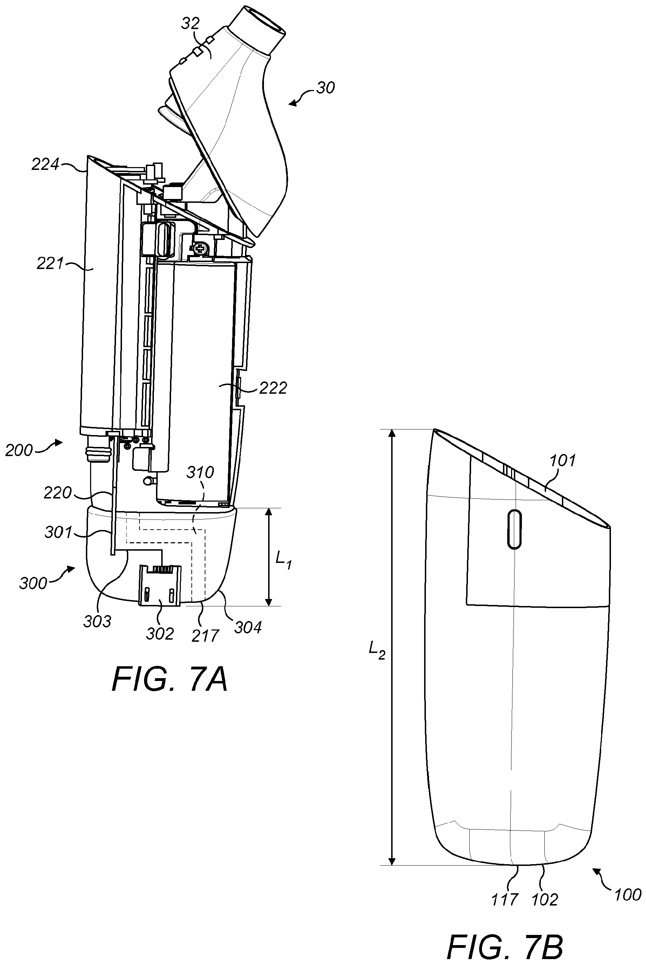

In this embodiment, only one of the shell portions 51, 52 is touching the bottom portion of the housing sleeve. This also makes is possible to arrange a separate component in the bottom of the housing sleeve, such as for instance an air channel piece or plug 300 as will be described in more detail in connection with figures 7 to 9.

As shown in Figure 6, the outer housing sleeve 10 further comprises a circumferential protrusion 13 (i.e. an inner rim on the inner surface of the housing) extending radially inward from an inner surface of the outer housing sleeve 10 and running around the circumference of the inner surface near the first open end 11 of the outer housing sleeve 10. The circumferential protrusion 13 is arranged to meet the corresponding rim 53 of the functional insert 20 as the functional insert 20 is inserted into the outer housing sleeve 10 such that the functional insert 20 is held within the outer housing sleeve 10. This ensures that the functional insert is held at the correct positioned along the length of the housing, for example to ensure the cartridge seating opening 26 is aligned with the open end of the housing 10.

Figure 6 also shows a guide rail 14 which runs along the elongate axis of the outer housing 10 along an inner surface from the circumferential protrusion 13 downwards towards the closed end 12 within the outer housing sleeve 10. The guide rail 14 is configured to engage with the corresponding slot 54 in the outer surface of the shell 50 of the functional insert 20 shown in Figure 5B. In this way, the functional insert 20 must be inserted in the correct orientation within the outer housing 10 such that the guide rail 14 engages with the slot 54 to guide the functional insert 20 into the housing 10 such that it is held at the correct position. This can be used for example to ensure that the functional insert 20 is correctly oriented in the device and, for example, the air inlet within the functional insert and the charging port are correctly aligned with corresponding apertures in the closed end 12 of the outer housing sleeve 10. Multiple guide rails 14 may be positioned around the circumference of the inner surface of the outer housing 10 with corresponding slots 54 arranged on the functional insert 20 to receive the guide rails. In the example of Figure 5 and 6, two guide rails 14 are provided on opposing surfaces within the outer housing 10 with corresponding slots 54 provided on opposing surfaces along the elongate axis of the functional insert 20.

The outer housing sleeve 10 and the functional insert preferably also include means to fasten the functional insert 20 to the outer housing sleeve when it is correctly received at the correct position within the outer housing sleeve 10. In the example shown in Figures 5 and 6 the outer housing sleeve 10 and the functional insert both include fastening features in the form of apertures 15, 55. In particular, an aperture 15 is provided on the top surface of the guide rail 14 within the outer housing sleeve and a corresponding aperture 55 is provided on the rim 53 of the functional insert, wherein the apertures 15, 55 are positioned so as to align when the functional insert 20 is received at the correct position within the outer housing sleeve 10. The functional insert 20 can then be secured to the outer housing sleeve by a fastener such as screws which are engaged through both sets of apertures 15, 55. In this way, the functional insert 20 can be secured within the outer housing sleeve 10 with minimal fastening means allowing the functional insert to be removed in a straightforward manner. Figure 4 shows the fasteners, in this case screws positioned within the functional insert apertures 55 on an upper surface of the functional insert below the mouthpiece 30. In this way, the screws are easily assessable allowing the electronic cigarette 1 to be assembled in a straightforward manner.

As shown in Figure 5B, the first end 24 of the functional insert 20 is preferably angled to provide a greater longitudinal length of the functional insert along a portion of the insert 20 comprising the cartridge seating 21. In other words, the functional insert 20 is shaped to have a varying length in the elongate direction from the first end 24 to the second end 25. In particular a sloping surface at the first end 24 provides a greater longitudinal length of the functional insert in a region which includes the cartridge seating 21. This allows the cartridge seating 21 to occupy a greater volume of the device, allowing the device to accept larger cartridges 40 with a longer duration of use. As described above, the first cartridge seating 21 and the battery 22 are preferably positioned side by side in the functional insert 20. The battery and first cartridge seating may be aligned along the elongate axis functional insert 20, providing the most efficient way to maximize the volume of both battery 22 and the elongate cartridge seating 21 in a given sized functional insert 20.

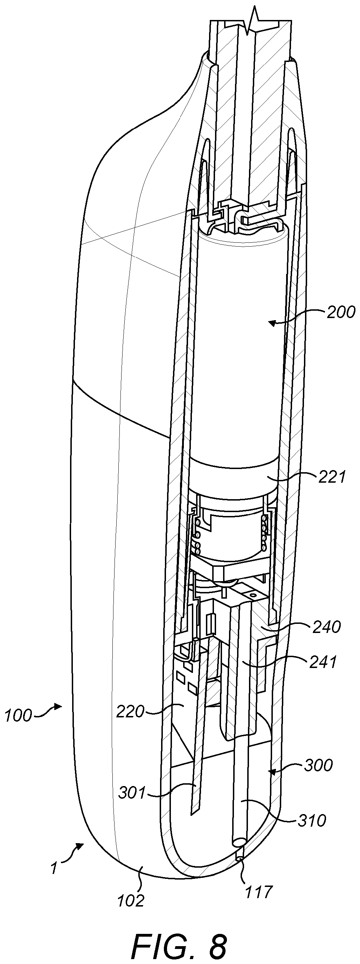

Figures 7 and 8 illustrate an alternative example of the electronic cigarette 1 according to the present invention. As with the previously described examples, the electronic cigarette 1 comprises an outer housing sleeve 100 having an open end and an opposing closed end 102. As with the previously described embodiments, the outer housing sleeve 100 has an air inlet 117 positioned on the closed end. The electronic cigarette 1 also includes a functional insert 200, shown in Figure 7A which comprises the electronical components including a cartridge seating 221 arranged to receive a movable cartridge 40, wherein the functional insert 200 is arranged to be introduced through the open end 101 of the outer housing sleeve 100 and retained within the housing sleeve 100 to form the electronic cigarette 1.

The examples of Figures 7 to 9 of an differ from the previously described electronic cigarettes 1 in that they further includes an air channel plug 210 which is arranged within the outer housing sleeve 100 between the closed end 102 of the outer housing sleeve 100 and the functional insert 200. The air channel plug 300 comprises an air channel 310 which provides at least a portion of an air flow route connecting the air inlet 117 of the outer housing sleeve 100 to the cartridge seating 221. The air channel plug 300 is a plug of material which occupies a portion of the internal volume of the outer housing sleeve 100 at the first end 102. In particular the air channel plug 300 may comprise a piece of material which substantially fills the internal volume of the closed end 102 of the outer housing sleeve 100 and extends a certain length L1 from the closed end 102 towards the open end 101.

The air channel plug 300 serves a number of purposes. It firstly acts to only allow air flow into the device 1 through a defined air flow passage way 310. Some devices which do not include such an air channel plug, air can enter the device through openings in the casing, for example the charging port, which lead to reduce the pressure drop when inhaling through the mouthpiece and can have implications for aerosol generation and for the correct triggering of the pressure sensor to activate the device. Furthermore, the air channel plug 300 can act to protect the electrical components of the functional insert 200 by preventing contact between the functional insert 200 and the closed end within the outer housing sleeve 100.

By managing the air flow route into the device through the air channel 310 within the air channel plug 300 it can be ensured that the air flow pressure exerted from inhaling at the mouthpiece is directed to the sensor and the sensor is not triggered by air flow through the openings at the base of the device over the air flow sensor. It also reduces the free internal volume of the device which can lead to a lack of responsiveness of the sensor. The air channel plug 300 is preferably made of a resilient deformable material such as an elastic material which deforms to the shape of the internal volume within the outer housing sleeve 100 and provides shock absorption within the device to protect the electrical components of the functional insert 200. The air channel plug 300 also provides a seal across the cross section of the internal volume of the outer housing sleeve 100 such that air flow into the outer housing sleeve 100 is restricted other than through passage via the air channel 310. The air channel plug 300 preferably extends over a length L1 from the closed end 102 of the outer housing sleeve towards the open end which corresponds to more than 25% of the total length of the housing L2, as measured from the closed end 102 to the open end 101. This provides sufficient shock absorption to prevent damage from accidental dropping of the device and also the advantage that it is possible to properly position the cartridge seating 221 and arrange the cartridge air inlet within the device.

The air channel 310 is preferably arranged such that it passes through the air channel plug 300, that is, it passes centrally through the mass of deformable elastomeric material. The air channel 310 and the air channel plug 300 which houses it may extend upwards from the closed end of the device sufficiently to engage with an inlet at the base of the cartridge seating such that the air channel connects the air inlet of the outer housing 100 directly to the air inlet of the cartridge seating 221 (not shown). In other examples, such as that shown in Figure 7A, the elastomeric material forming the air channel plug 300 may only extend a certain distance up the length of the housing leaving a gap and an internal volume of the housing which is open between the air channel plug 300 and the air inlet to the cartridge seating 221.

The functional insert 200 preferably contacts the air channel plug 300 within the outer housing sleeve to provide the shock absorption and to prevent significant contact between the functional insert and the outer housing sleeve which might provide sufficient forces to damage the components. More preferably, the functional insert 200 is engaged with the air channel plug 300 such that they are attached together and the functional insert 200 and the air channel plug 300 may be assembled as an integral assembly which can then be inserted and secured within the outer housing sleeve 100. This provides significant advantages in terms of simplicity of manufacture.

The connection between the functional insert 200 and the air channel plug 300 may be achieved in a number of different ways. In the example of Figure 7A, the PCB 220 extends along the elongate axis of the device 1 from its connection with the battery 222 and cartridge seating 221 towards the second base end 102, where it engages with a slot 301 provided in the air channel plug 300. In this way, the PCB 220, which is connected to the electronic components of the functional insert 200, extends along the elongate axis downwards towards the closed end of the housing 100 and extends within a slot provided in the air channel plug 300 which retains the PCB providing a mechanical connection between the functional insert 200 and the air channel plug 300.

The electronic cigarette 1 described above and in respect to the Figures 7 and 8 also can include a charging port 302 allowing the device to be connected to a mains power supply to charge the battery 222. In the examples of Figure 7 and 8 the charging port 302 is provided within the air channel plug 300 and is connected to the electronic components of the functional insert 200 by electrical circuitry 303. This provides another connection between the air channel plug 300 and the functional insert 200. In particular, the charging port 302 is generally a metallic aperture arranged to receive a mains charger and may be positioned wholly or partially within the elastomeric material of the air channel plug 300 with the open end of the charging port extending out of the base such that it protrudes sufficiently to align with an aperture at the closed end 102 of the outer housing sleeve 100. The charging port 302 may be connected to the PCB 220 within the slot 301 within the air channel plug 300. In this way, a mechanical and electrical connection is provided between the functional insert 200 and the air channel plug 300 using the existing features of these components, i.e. without requiring any additional securing components.

When the functional insert 200 and connected air channel plug 300 are positioned within the outer housing sleeve 100 shown in Figure 7B, the lower end 304 of the air channel plug 300, which includes the charging port 302, engages with the inside of the closed end 102 of the outer housing sleeve 100. The charging port 302 aligns with a corresponding opening in the base of the outer housing sleeve 100 and the opening 217 of the air channel 310 of the air channel plug 300 aligns with the air inlet 117 at the base at the closed end 102 of the outer housing sleeve 100.

As described above, in the examples of Figures 7A and 7B a mouthpiece portion 30 is provided at the first end 224 of the functional insert 200 wherein the mouthpiece portion 30 is hingedly connected to the functional insert such that when the functional insert 200 is received within the outer housing sleeve 100 the mouthpiece is moveable between an open position shown in Figure 7A and a closed position in which the open end 101 of the outer housing sleeve is sealed and the second cartridge seating 32 is connected with the first cartridge seating 221 of the functional insert 200. These components are as described above with respect to Figures 1 to 6.

Figure 8 schematically illustrates another example of an electronic cigarette 1 including a functional insert 200 and an air channel plug 300 received within the outer housing sleeve 100 to form the e-cigarette 1. As described above, the air channel plug 300 comprises a plug of elastic material positioned within the outer housing sleeve at the closed end to separate the inner surfaces of the closed end from the functional insert 200 and provide shock absorbing properties and control of the air flow route from the air inlet 117 at the closed end 102 of the outer housing sleeve 100 to the first cartridge seating 221. As described above the PCB 220 connected to the functional insert 200 extends downwards along the elongate axis of the electronic cigarette 1 to engage with a slot 301 providing a mechanical connection between the air channel plug 300 and the functional insert 200.

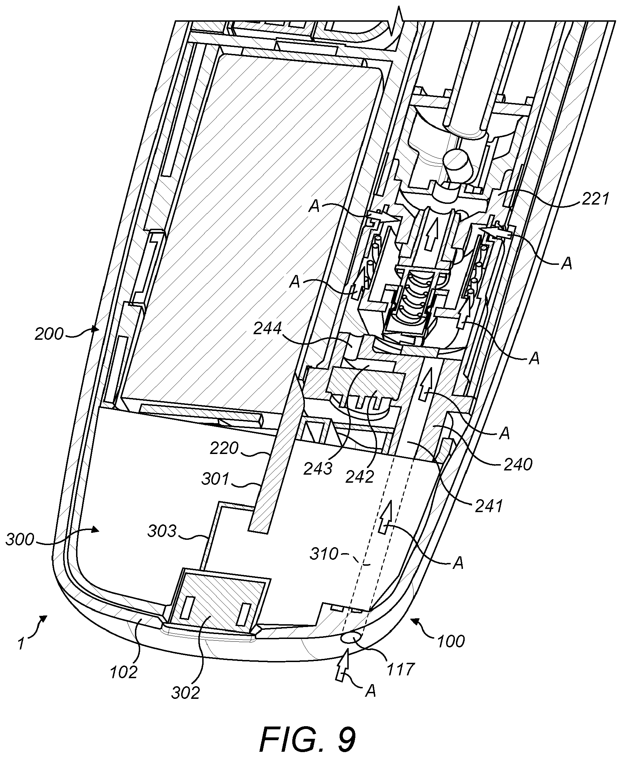

Figure 8 further illustrates an air flow sensor housing 240 which houses an air flow sensor (shown in Figure 9) within an internal cavity arranged to hold the air flow sensor. The internal cavity which holds the air flow sensor is in fluidic communication with the first cartridge seating 221 such that the air flow sensor is triggered when the user inhales at the mouthpiece 30. The air flow sensor is also connected to the power supply to turn on the power to the heater from the battery when a change in air pressure, corresponding to a user inhaling at the device, is detected. As shown in Figure 8, the air flow sensor housing 240 also includes a separate air flow through channel 241 which is not in connection with the internal chamber. The air flow through channel 241 is connected to the air flow passage 310 within the air channel plug 300. Together therefore, the air flow through channel 241 of the air flow sensor housing 240 and the air channel 310 of the air channel plug provide the air flow route from the air inlet 117 in the outer housing sleeve 100 to the cartridge seating 221. The air flow sensor housing 240 may also comprise a similar material to the air channel plug 300 such as a resilient deformable material such as an elastic material. Together, the air channel plug 300 and the air flow sensor housing 240 provide the air flow route from the inlet to the cartridge seating 221 and ensure that this does not pass over the air flow sensor. This prevents the air flow sensor being triggered via air flow through the inlet 117 but only via the reduction in air pressure from the user inhaling at the mouthpiece which is delivered directly to the internal chamber of the airflow sensor housing. These features are described in more detail with reference to Figure 9.

Figure 9 shows an enlarged portion of the base end 102 of the electronic cigarette 1, opposite to the mouthpiece end 101. Figure 9 shows the air channel plug 300 positioned between the functional insert 200 and the internal surface of the closed base end 102 of the outer housing shell 100. Again, the PCB 220 connected to the functional insert 200 extends downwardly into a slot 301 in the air channel plug 300 and is connected via electrical circuitry 303 to the charging port 302 which embedded within the air channel plug and is accessible through an aperture at the base of the outer housing sleeve 100.

Figure 9 depicts the air flow route from the inlet 117 in the outer housing shell 100 to the cartridge seating 221 with a series of arrows A. Figure 9 also shows the air flow sensor 242 positioned in an internal cavity 243 within the surrounding air sensor housing 240. As shown in the cross sectional view of Figure 9, the air flow sensor cavity 243 is connected to the air flow route to the mouthpiece via an air flow cavity inlet 244. The air flow cavity inlet 244 extends upwards from the cavity 243 within the sensor housing 240 towards the cartridge seating 221, such as a change of pressure due to a user inhaling is communicated to the air flow sensor cavity 243.

Figure 9 also shows the air flow through channel 241 from the air inlet 117 through the air flow sensor housing 240. As clearly shown the air flow through channel 241 is separated from the airflow sensor chamber 243 such that air flow through this path does not pass over the air flow sensor 242. This ensures improved functioning of the air flow sensor 242, in particular increasing the responsiveness.

In this example, the air channel plug 300 extends from the closed end 102 of the housing upwards to meet the air flow sensor housing 240. Furthermore, the air flow channel 310 provided in the air channel plug 300 directly connects the air inlet 117 in the outer housing sleeve 100 to the air flow through channel 241 in the air flow sensor housing 240. Therefore, together the air channel plug 300 and the air flow sensor housing 240 form an air flow path from the air inlet to the cartridge seating 221. In particular, as shown by the arrows A, the air enters the air inlet 117 passes through the air flow channel 310 of the air channel plug 300 enters the air flow through channel 241 of the air flow sensor housing 240 and is directed into the base of the cartridge seating 221 to extract the vapour generated therein and carry it to the mouthpiece 30. Because there is no direct air flow from the inlet over the air flow sensor, the air flow sensor is more sensitive to air flow pressure changes due to inhalation at the mouthpiece.

## Claims

1. An electronic cigarette (1) comprising
an outer housing sleeve (10) having an open end (11) and a closed end (12);
a functional insert (20) comprising electrical components, where the electrical components comprise a battery (22), a cartridge seating (21) for receiving a removable cartridge (40) containing a liquid to be vaporized and electronic circuitry for supplying power from the battery (22) to a cartridge (40) received in the cartridge seating (21) during use;
wherein the functional insert (20) is arranged to be introduced through the open end (11) of the outer housing sleeve (10) and is held within the outer housing sleeve (10);
wherein the functional insert (20) comprises a first shell portion (51) and a second shell portion (52); wherein the first and second shell portions (51, 52) are configured to connect along a longitudinal interface to enclose the electrical components within.

2. The electronic cigarette (1) of claim 1 wherein the cartridge seating (21) is arranged such that a cartridge (40) lies fully within the outer housing sleeve (10) when received in the cartridge seating (21) during use.

3. The electronic cigarette (1) of any preceding claim wherein the functional insert (20) comprises a first end (24) positioned at the open end (11) of the housing sleeve (10) and a second end (25) positioned towards the closed end (12) of the housing sleeve (10), the electronic cigarette (10 further comprising:
a mouthpiece (30) at the fist end (24) of the functional insert (20), the mouthpiece (30) moveable between an open and closed position.

4. The electronic cigarette (1) of claim 4 wherein the mouthpiece (40) is moveable by a hinge mechanism (70) connecting the mouthpiece (40) to the first end (24) of the functional insert (20).

5. The electronic cigarette (1) of claim 5 wherein the hinge mechanism (70) comprises an L-shaped lever (72) which connects a central point on the mouthpiece (30) to a point near the edge of the first end of the functional insert (20).

6. The electronic cigarette (1) according to any preceding claim wherein the outer housing sleeve (10) further comprises a rim (13) running circumferentially around an inner surface of the sleeve (10) at the open end (11); wherein the functional insert (20) is configured to engage with the rim (13).

7. The electronic cigarette (1) of claim 6 wherein the functional insert (20) comprises a circumferential rim (53) running around the outer surface of the functional insert (20), wherein the circumferential rim (53) of the functional insert (20) is arranged to contact the rim (13) of the housing sleeve (10) to hold the functional insert (20) in position within the housing sleeve (10).

8. The electronic cigarette (1) of any preceding claim wherein the housing sleeve (10) comprises a first aperture (15) on an inner surface at the open end (11) and the functional insert (20) comprises a second, corresponding, aperture (55) arranged to align with the first aperture (15) to allow the housing sleeve (10) and functional insert (20) to be attached with a fastener through the aligned apertures.

9. The electronic cigarette (1) of any preceding claim, wherein the first shell portion (51) and the second shell portion (52) are offset in relation to each other, such that one shell portion extends further than the other in a direction towards the closed end (12) of the housing sleeve (10).

10. The electronic cigarette (1) of any preceding claim, wherein the first and second shell portions (51, 52) comprise a thermoplastic material suitable for thermoplastic or ultrasonic welding.

11. The electronic cigarette (1) of any preceding claim wherein the first shell portion (51) and the second shell portion (52) comprise engaging structures configured to attach to each other, wherein the engaging structures provide a snap-lock or friction fit.

12. The electronic cigarette (1) of any preceding claim, wherein the housing sleeve (10) further comprises at least one guide rail (14) arranged along an inner surface and the functional insert (20) comprises a slot configured to engage with the guide rail (14).

13. The electronic cigarette of claim 12 wherein the guide rail (14) further comprises an aperture for receiving a fastener in order to attach the insert (20) to the housing sleeve (10).

14. The electronic cigarette (1) of any preceding claim wherein the functional insert (20) comprises a first end comprising an opening to the cartridge seating (21) and a second end at the opposite end of the functional insert (20); wherein the first end of the functional insert 2. (20) is angled such that the functional insert (20) has an increased length along a longitudinal line passing through the cartridge seating (21).

15. The electronic cigarette (1) of any preceding claim, wherein the functional insert (20) is elongate; wherein the battery (22) and the cartridge (40) are positioned side-by- side along the elongate axis of the functional insert (20) when the cartridge (40) is received in the cartridge seating (21).

## Patentansprüche

1. Elektronische Zigarette (1), umfassend:
Eine äußere Gehäusehülse (10) mit einem offenen Ende (11) und einem geschlossenen Ende (12);
einen funktionsfähigen Einsatz (20), der elektrische Komponenten umfasst, wobei die elektrischen Komponenten eine Batterie (22), einen Patronensitz (21) zur Aufnahme einer entfernbaren Patrone (40), die zu verdampfende Flüssigkeit enthält, und elektronische Schaltung zur Stromversorgung, während des Gebrauchs, von der Batterie (22) zu einer im Patronensitz (21) aufgenommenen Patrone (40) umfassen,
wobei der funktionsfähige Einsatz (20) eingerichtet ist, durch das offene Ende (11) der äußeren Gehäusehülse (10) eingeführt und innerhalb der äußeren Gehäusehülse (10) gehalten zu werden;
wobei der funktionsfähige Einsatz (20) einen ersten Schalenteil (51) und einen zweiten Schalenteil (52) umfasst, wobei die ersten und zweiten Schalenteile (51, 52) so konfiguriert sind, dass sie sich entlang einer longitudinalen Schnittstelle verbinden, um die elektrischen Komponenten darin einzuschließen.

2. Elektronische Zigarette (1) nach Anspruch 1, wobei der Patronensitz (21) so eingerichtet ist, dass eine Patrone (40), während des Gebrauchs, völlig innerhalb der äußeren Gehäusehülse (10) liegt, wenn sie im Patronensitz (21) aufgenommen ist.

3. Elektronische Zigarette (1) nach irgendeinem vorhergehenden Anspruch, wobei der funktionsfähige Einsatz (20) ein erstes Ende (24), das am offenen Ende (11) der Gehäusehülse (10) positioniert ist und ein zweites Ende (25) umfasst, das in Richtung des geschlossenen Endes (12) der Gehäusehülse (10) positioniert ist, wobei die elektronische Zigarette (10) weiter umfasst:
Ein Mundstück (30) am ersten Ende (24) des funktionsfähigen Einsatzes (20), wobei das Mundstück (30) zwischen einer offenen und geschlossenen Position beweglich ist.

4. Elektronische Zigarette (1) nach Anspruch 4, wobei das Mundstück (40) mithilfe von einem Scharniermechanismus (70) beweglich ist, der das Mundstück (40) mit dem ersten Ende (24) des funktionsfähigen Einsatzes (20) verbindet.

5. Elektronische Zigarette (1) nach Anspruch 5, wobei der Scharniermechanismus (70) einen L-förmigen Hebel (72) umfasst, der einen zentralen Punkt am Mundstück (30) mit einem Punkt nahe der Kante des ersten Endes des funktionsfähigen Einsatzes (20) verbindet.

6. Elektronische Zigarette (1) nach irgendeinem vorhergehenden Anspruch, wobei die äußere Gehäusehülse (10) weiter einen Rand (13) umfasst, der umlaufend um eine Innenfläche der Hülse (10) am offenen Ende (11) verläuft, wobei der funktionsfähige Einsatz (20) konfiguriert ist, in den Rand (13) zu rasten.

7. Elektronische Zigarette (1) nach Anspruch 6, wobei der funktionsfähige Einsatz (20) einen umlaufenden Rand (53) umfasst, der um die Außenfläche des funktionsfähigen Einsatzes (20) verläuft, wobei der umlaufende Rand (53) des funktionsfähigen Einsatzes (20) eingerichtet ist, den Rand (13) der Gehäusehülse (10) zu kontaktieren, um den funktionsfähigen Einsatz (20) innerhalb der Gehäusehülse (10) in Position zu halten.

8. Elektronische Zigarette (1) nach irgendeinem vorhergehenden Anspruch, wobei die Gehäusehülse (10) eine erste Öffnung (15) an einer Innenfläche des offenen Endes (11) umfasst und der funktionsfähige Einsatz (20) eine zweite, entsprechende, Öffnung (55) umfasst, die mit der ersten Öffnung (15) ausgerichtet ist, um zu ermöglichen, dass die Gehäusehülse (10) und der funktionsfähige Einsatz (20) durch die ausgerichteten Öffnungen mit einem Befestigungselement befestigt werden können.

9. Elektronische Zigarette (1) nach irgendeinem vorhergehenden Anspruch, wobei der erste Schalenteil (51) und der zweite Schalenteil (52) so zueinander versetzt sind, dass sich ein Schalenteil weiter als der andere in eine Richtung zum geschlossenen Ende (12) der Gehäusehülse (10) erstreckt.

10. Elektronische Zigarette (1) nach irgendeinem vorhergehenden Anspruch, wobei die ersten und zweiten Schalenteile (51, 52) ein thermoplastisches Material umfassen, dass sich für Thermoplast- oder Ultraschallschweißen eignet.

11. Elektronische Zigarette (1) nach irgendeinem vorhergehenden Anspruch, wobei der erste Schalenteil (51) und der zweite Schalenteil (52) Eingriffsstrukturen umfassen, die so konfiguriert sind, dass sie sich aneinander befestigen, wobei die Eingriffsstrukturen eine Schnappverschluss- oder Reibpassung bereitstellen.

12. Elektronische Zigarette (1) nach irgendeinem vorhergehenden Anspruch, wobei die Gehäusehülse (10) weiter mindestens eine Führungsschiene (14) umfasst, die entlang einer Innenfläche angeordnet ist und der funktionsfähige Einsatz (20) einen Schlitz umfasst, der so konfiguriert ist, dass er mit der Führungsschiene (14) rastet.

13. Elektronische Zigarette nach Anspruch 12, wobei die Führungsschiene (14) weiter eine Öffnung zur Aufnahme eines Befestigungselements umfasst, um den Einsatz (20) an die Gehäusehülse (10) anzubringen.

14. Elektronische Zigarette (1) nach irgendeinem vorhergehenden Anspruch, wobei der funktionsfähige Einsatz (20) ein erstes Ende umfasst, welches eine Öffnung zum Patronensitz (21) und ein zweites Ende am entgegengesetzten Ende des funktionsfähigen Einsatzes (20) umfasst, wobei das erste Ende des funktionsfähigen Einsatzes (20) so abgewinkelt ist, dass der funktionsfähige Einsatz (20) entlang einer durch den Patronensitz (21) verlaufenden longitudinalen Linie eine vergrößerte Länge aufweist.

15. Elektronische Zigarette (1) nach irgendeinem vorhergehenden Anspruch, wobei der funktionale Einsatz (20) länglich ist, wobei die Batterie (22) und die Patrone (40) nebeneinander entlang der Längsachse des funktionsfähigen Einsatzes (20) positioniert sind, wenn die Patrone (40) in der Patronenaufnahme (21) aufgenommen ist.

## Revendications

1. Cigarette électronique (1) comprenant
une douille formant boîtier extérieur (10) dotée d'une extrémité ouverte (11) et d'une extrémité fermée (12) ;
un insert fonctionnel (20) comprenant des composants électriques, où les composants électriques comprennent une batterie (22), un logement pour cartouche (21) destiné à recevoir une cartouche séparable (40) contenant un liquide à vaporiser et une circuiterie électronique servant, à l'usage, à alimenter une cartouche (40) placée dans le logement pour cartouche (21) avec le courant fourni par la batterie (22) ;
où l'insert fonctionnel (20) est conçu pour être introduit au travers de l'extrémité ouverte (11) de la douille formant boîtier extérieur (10) et est maintenu à l'intérieur de la douille formant boîtier extérieur (10) ;
où l'insert fonctionnel (20) comprend une première partie formant coque (51) et une seconde partie formant coque (52) ;
où les première et seconde parties formant coque (51, 52) sont configurées pour être raccordées le long d'une interface longitudinale de manière à renfermer les composants électriques à l'intérieur.

2. Cigarette électronique (1) de la revendication 1, où le logement pour cartouche (21) est disposé de manière qu'à l'usage, une cartouche (40) est entièrement contenue dans la douille formant boîtier extérieur (10) quand elle est placée dans le logement pour cartouche (21).

3. Cigarette électronique (1) de l'une quelconque des revendications précédentes, où l'insert fonctionnel (20) comprend une première extrémité (24) située à l'extrémité ouverte (11) du boîtier gainé (10) et une seconde extrémité (25) située vers l'extrémité fermée (12) du boîtier gainé (10), la cigarette électronique (10 comprenant en outre :
un embout buccal (30) à la première extrémité (24) de l'insert fonctionnel (20), l'embout buccal (30) étant déplaçable entre une position ouverte et fermée.

4. Cigarette électronique (1) de la revendication 4, où le déplacement de l'embout buccal (40) fait intervenir un mécanisme à charnière (70) raccordant l'embout buccal (40) à la première extrémité (24) de l'insert fonctionnel (20).

5. Cigarette électronique (1) de la revendication 5, où le mécanisme à charnière (70) comprend un levier en forme de L (72) qui raccorde un point central de l'embout buccal (30) à un point proche de la bordure de la première extrémité de l'insert fonctionnel (20).

6. Cigarette électronique (1) selon l'une quelconque des revendications précédentes, où la douille formant boîtier extérieur (10) comprend en outre un rebord (13) qui s'étend de manière circonférentielle autour d'une surface interne du boîtier gainé (10) au niveau de l'extrémité ouverte (11) ; où l'insert insert fonctionnel (20) est configuré pour être mis en prise avec le rebord (13).

7. Cigarette électronique (1) de la revendication 6, où l'insert fonctionnel (20) comprend un rebord circonférentiel (53) qui s'étend autour de la surface externe de l'insert fonctionnel (20),
où le rebord circonférentiel (53) de l'insert fonctionnel (20) est disposé pour être en contact avec le rebord (13) du boîtier gainé (10) de manière à maintenir l'insert fonctionnel (20) en place à l'intérieur du boîtier gainé (10).

8. Cigarette électronique (1) de l'une quelconque des revendications précédentes, où le boîtier gainé (10) comprend une première ouverture (15) sur une surface interne à l'extrémité ouverte (11) et où l'insert fonctionnel (20) comprend une seconde ouverture correspondante (55) disposée de manière à s'aligner avec la première ouverture (15) pour permettre au boîtier gainé (10) et à l'insert fonctionnel (20) d'être raccordés au moyen d'un élément de fixation au travers des ouvertures alignées.

9. Cigarette électronique (1) de l'une quelconque des revendications précédentes, où la première partie formant coque (51) et la seconde partie formant coque (52) sont décalées l'une part rapport à l'autre de sorte qu'une partie formant coque se prolonge plus loin que l'autre dans une direction orientée vers l'extrémité fermée (12) du boîtier gainé (10).

10. Cigarette électronique (1) de l'une quelconque des revendications précédentes, où les première et seconde parties formant coque (51, 52) comprennent un matériau thermoplastique qui se prête à un soudage thermoplastique ou ultrasonique.

11. Cigarette électronique (1) de l'une quelconque des revendications précédentes, où la première partie formant coque (51) et la seconde partie formant coque (52) comprennent des structures de mise en prise configurées pour être raccordées l'une à l'autre, les structures de mise en prise fournissant un ajustement par crans ou par friction.

12. Cigarette électronique (1) de l'une quelconque des revendications précédentes, où le boîtier gainé (10) comprend en outre au moins un rail de guidage (14) disposé le long d'une surface interne et où l'insert fonctionnel (20) comprend une fente configurée pour être mise en prise avec le rail de guidage (14).

13. Cigarette électronique de la revendication 12, où le rail de guidage (14) comprend en outre une ouverture conçue pour recevoir un élément de fixation afin de raccorder l'insert (20) au boîtier gainé (10).

14. Cigarette électronique (1) de l'une quelconque des revendications précédentes, où l'insert fonctionnel (20) comprend une première extrémité comprenant un accès au logement pour cartouche (21) et une seconde extrémité du côté opposé de l'insert fonctionnel (20) ; où la première extrémité de l'insert fonctionnel (20) est biseautée de sorte que l'insert fonctionnel (20) présente une plus grande longueur le long d'une ligne longitudinale passant au travers du logement pour cartouche (21).

15. Cigarette électronique (1) de l'une quelconque des revendications précédentes, où l'insert fonctionnel (20) est allongé ; où la batterie (22) et la cartouche (40) sont situées côte à côte le long de l'axe allongé de l'insert fonctionnel (20) quand la cartouche (40) est placée dans le logement pour cartouche (21).
